# EUROPÄISCHE PATENTSCHRIFT

(11) **EP 0 685 414 B1**
(45) Veröffentlichungstag und Bekanntmachung des Hinweises auf die Patenterteilung: **22.10.1997**
(21) Anmeldenummer: 95103906.4
(22) Anmeldetag: 17.03.1995
(51) Int. Cl.: B65G 33/14, B65G 33/26, E03F 5/14

(54) **Spiralförderer**
Helical conveyor
Transporteur hélicoidal

(30) Priorität: 03.06.1994 DE 4419612
(43) Veröffentlichungstag der Anmeldung: 06.12.1995
(73) Patentinhaber: Noggerath Holding GmbH & Co. KG, D-31708 Ahnsen (DE)
(72) Erfinder: Eicker, Peter, D-31737 Rinteln (DE); Ebeling, Kurt, D-31749 Auetal (DE)
(74) Vertreter: Gleiss, Alf-Olav, Dr.jur. Dipl.-Ing.

(56) Entgegenhaltungen:
- WO-A-90/05100
- DE-A- 2 115 791
- DE-A- 2 628 015
- DE-A- 3 915 529
- DE-C- 3 915 528

## Beschreibung

Die Erfindung betrifft einen Spiralförderer zum Transportieren von Feststoffen gemäß Oberbegriff des Anspruchs 1.

Spiralförderer der hier angesprochenen Art sind bekannt (DE 39 15 529 A1). Sie weisen eine umlaufende, das heißt, um eine Dreh- beziehungsweise Mittelachse rotierende Förderschnecke auf, die zumindest abschnittsweise als wellenlose Spirale ausgebildet ist. Diese dreht sich innerhalb eines Mantels, der sich wenigstens über einen Bereich der Umhüllenden der Spirale erstreckt. Derartige Spiralförderer dienen dazu, trockenes, feuchtes, nasses, pastöses, klebendes, staubförmiges und/oder grobstückiges Material zu transportieren. Der Mantel kann dabei die Spirale der Förderschnecke mehr oder weniger weit umgeben. Es ist also auch möglich, die Förderschnecke allseitig einzuschließen, um Staub-, Streu- und Geruchsprobleme zu vermeiden.

Die Mittelachse der Förderschnecke kann in einem Bereich von 0° bis etwa 35° gegenüber der Horizontalen angeordnet sein. Es hat sich in vielen Fällen herausgestellt, daß die Menge der transportierbaren Feststoffe stark vom Neigungswinkel abhängt. Insbesondere bei Neigungswinkeln von mehr als 35° fallen die Feststoffe durch den freien Innenraum der wellenlosen Spirale der Förderschnecke zurück, so daß die Förderleistung des Spiralförderers bis auf Null abfällt.

Aus der WO/90/5100 ist ein Spiralförderer bekannt, der eine wellenlose Spirale mit wenigstens zwei im wesentlich bandförmig entlang einer gedachten Schraubenlinie verlaufenden Spiralgängen besitzt.

Aus der DE 26 28 015 A1 ist eine als wendelflächenförmiges Maschinenteil bezeichnete Spirale bekannt, die mit einer rotierenden Achse zusammenwirkt und dazu dient, von einem Bohrer abgetragenes Material aus der Bohrung herauszufördern. Die Spirale ist aus zwei ineinandergefügten Komponeten zusammengesetzt und relativ aufwendig herzustellen.

Eine besondere Art der Spiralförderer wird dazu eingesetzt, Feststoffe aus einem Feststoff-Flüssigkeitsgemisch auszutragen, das in einem Gerinne strömt. Unter Gerinne wird hierbei eine Transportstrecke zum Transportieren des Feststoff-Flüssigkeitsgemisches verstanden. Bekannte Gerinne können beispielsweise aus Beton, Stahl, Edelstahl, Aluminium, Kunststoff und anderen geeigneten Werkstoffen hergestellt sein. Darüber hinaus kann der Spiralförderer an einem Behälter angeordnet sein, in dem das Feststoff-Flüssigkeitsgemisch enthalten ist. Der Behälter kann hierbei als Sammelbehälter, Zwischenlagerbehälter, Speicherbehälter oder ähnliches dienen und aus jedem beliebigen geeigneten Material bestehen. Der Mantel derartiger Spiralförderer ist vorzugsweise für die strömende Flüssigkeit durchlässig und dazu als Siebmantel ausgebildet, der unter einem Neigungswinkel in das Gerinne eintaucht.

Er setzt sich als geschlossenes Rohr fort, in dem die ausgetragenen Feststoffe komprimiert, gegebenenfalls entwässert und schließlich in einen Auffangbehälter abgeworfen werden. Zur Verbesserung der Durchströmungseigenschaften der Förderschnecke ist diese - zumindest im Bereich des Gerinnes - als wellenlose Spirale ausgebildet, das heißt also, der zentrale Bereich der Spirale ist offen. Dies führt dazu, daß bei einem Installationswinkel des Siebmantels beziehungsweise der Förderschnecke von mehr als 35° die aus der Flüssigkeit ausgetragenen Feststoffe durch den zentralen freien Bereich der Spirale zurückfallen und nicht mehr ausgetragen werden. Dies führt dazu, daß bei verschiedenen Förderhöhen unterschiedliche Baulängen der Förderschnecke gegeben sind, so daß sich hohe Herstellungskosten einstellen.

Es ist daher Aufgabe der Erfindung, einen Spiralförderer der eingangs genannten Art zu schaffen, der die hier genannten Nachteile nicht aufweist, und der insbesondere unter einem steileren Installationswinkel verwendbar ist.

Diese Aufgabe wird mittels eines Spiralförderers gelöst, der die in Anspruch 1 genannten Merkmale aufweist. Er zeichnet sich dadurch aus, daß der in Transportrichtung vordere Spiralgang einen geringeren Abstand zur Mittelachse der Spirale aufweist als der in Transportrichtung hintere Spiralgang und daß die gegebenenfalls vorhandene Bürste in einer von zwei Spiralgängen auf der Transportseite der Spirale gebildeten Stufe angeordnet ist. Die einzelnen Spiralgänge schließen mit der Dreh- beziehungsweise Mittelachse der Spirale einen Winkel von ca. 90° ein. Sie sind so angeordnet, daß sie eine Stufe bilden, wobei die durch die gegeneinander abgesetzt angeordneten Spiralgänge gebildete Stufe, also von der Mittelachse der Spirale aus gesehen, in Richtung zum Mantel hin abfällt. Dadurch wird verhindert, daß von der Spirale beförderte Feststoffe durch den freien Mittelbereich der wellenlosen Spirale entgegen der Transportrichtung zurückfallen, also nicht weitergefördert werden können. Durch die in der von den äußeren Spiralgängen gebildeten Stufe angeordneten Bürste wird erreicht, daß die mit der Innenseite des Siebmantels zusammenwirkende Bürste quasi zurückgesetzt angeordnet ist, indem der den Siebmantel am nächsten liegende Spiralgang bereichsweise neben der Bürste verläuft. Diese Anordnung stellt sicher, daß der auf das Siebgut wirkende Reibungswiderstand der Spiralbürste deutlich verringert und somit ein Gleiten des Fördermaterials an der Spiralenflanke erleichtert wird.

In vorteilhafter Ausgestaltung der Erfindung ist vorgesehen, daß die Bürste mit ihrer in Transportrichtung verlaufenden Seitenfläche mit einer im wesentlichen radial zur Mittelachse verlaufenden Transportfläche des zweitäußersten Spiralgangs fluchtet. Hiermit wird erreicht, daß die Bürste mit dem zweitäußersten Spiralgang eine durchgehende, glatte Fläche bildet und daß dem durch Tangential- und Schwerkraft nach außen gleitendem Fördergut der geringstmögliche Widerstand entgegengesetzt wird. Für das Förderverhalten hat sich als sehr günstig herausgestellt, wenn das Fördermaterial auf der Spirale der Bürste gut gleitet. Als Gegenkraft wirkt der Reibungswiderstand an dem die Spirale umgebenden Mantel. Durch die Ausbildung der durchgehenden glatten Fläche wird nunmehr erreicht, daß der Reibungswiderstand des Fördergutes an dem Mantel größer ist als der Reibungswiderstand des Fördergutes auf der Transportfläche der Spirale. Hierdurch wird zuverlässig verhindert, daß das Fördergut auf der Spirale liegen bleibt und lediglich im Kreise herumfährt, ohne von der Spirale gleitend am Mantel entlang in Förderrichtung gefördert zu werden.

Weiterhin ist ein Spiralförderer bevorzugt, bei dem die Breite des innersten Spiralgangs im Verhältnis zu dessen in axialer Richtung der Spirale gemessenen Höhe sehr klein ist. Dadurch ergibt sich eine Gewichtseinsparung für die Spirale, ohne auf die Ausbildung einer Stufe zwischen dem innersten und dem zweitinnersten Spiralgang zu verzichten. Durch diese in axialer Richtung relativ lang ausgebildeten Stufe ergibt sich eine Verbesserung des Förderverhaltens der Spirale. Durch die in radialer Richtung kleine Breite des innersten Spiralgangs trägt dieser im wesentlichen nicht zu einem Materialeintrag in die Spirale bei, während er jedoch sicher das Zurückfallen von bereits in die Spirale gelangtem Transportgut in den zwischen den Spiralgängen vorhandenen Freiraum verhindert.

Bevorzugt wird eine Ausführungsform des Spiralförderers, bei dem die von der Mittelachse abgewandte Schmalseite eines Spiralgangs eine Stufe bildet, die vorzugsweise rechtwinklig zur Oberfläche des benachbarten, zurückspringenden Spiralgangs abfällt. Durch diese Bauform wird verhindert, daß von der Spirale ausgetragene Feststoffe gegen den Mantel gepreßt werden, was zu erhöhten Reibungskräften führen würde, gegebenenfalls auch zu einem Transportstau aufgrund von eingeklemmten Materialien.

Bevorzugt wird weiterhin eine Ausführungsform des Spiralförderers, bei dem der Mantel als Siebmantel ausgebildet ist, und der daher zum Austragen von Feststoffen aus einem Feststoff-Flüssigkeitsgemisch aus einem Gerinne oder einem Behälter einsetzbar ist. Ein derartiger Spiralförderer zeichnet sich dadurch aus, daß die Förderschnecke gegenüber der Horizontalen unter einem Winkel von mehr als 35° angeordnet werden kann.

Weitere Ausgestaltungen ergeben sich aus den Unteransprüchen.

Die Erfindung wird im folgenden anhand der Zeichnung näher erläutert. Es zeigen:
- Figur 1: eine schematische Seitenansicht eines in ein Gerinne eingesetzten Spiralförderers;
- Figur 2: eine Seitenansicht einer in dem Spiralförderer gemäß Figur 1 eingesetzten Spirale;
- Figur 3: eine Prinzipskizze eines Schnitts durch ein weiteres Ausführungsbeispiel einer Spirale;
- Figur 4: eine Prinzipskizze eines weiteren Ausführungsbeispiels einer Spirale;
- Figur 5 bis 7: Querschnittskizzen von weiteren Ausführungsbeispielen einer Spirale und
- Figur 8: eine schematische Schnïttdarstellung durch ein besonders bevorzugtes Ausführungsbeispiel.

Der erfindungsgemäße Spiralförderer kann allgemein zum Transportieren von Feststoffen eingesetzt werden. Sofern der die Förderschnecke wenigstens über einen Teilbereich der Umhüllenden umgebende Mantel als Siebmantel ausgebildet ist, kann der Spiralförderer auch als Siebförderer dienen, um aus einem Gerinne oder einem Behälter (gemäß der eingangs genannten Ausführungsvarianten) Feststoffe aus einem Feststoff-Flüssigkeitsgemisch auszutragen. Die folgenden Erläuterungen gehen von der Sonderform des Spiralförderers an einem Gerinne aus, was jedoch in keinem Fall eine Beschränkung auf diese Sonderform des Spiralförderers bedeutet.

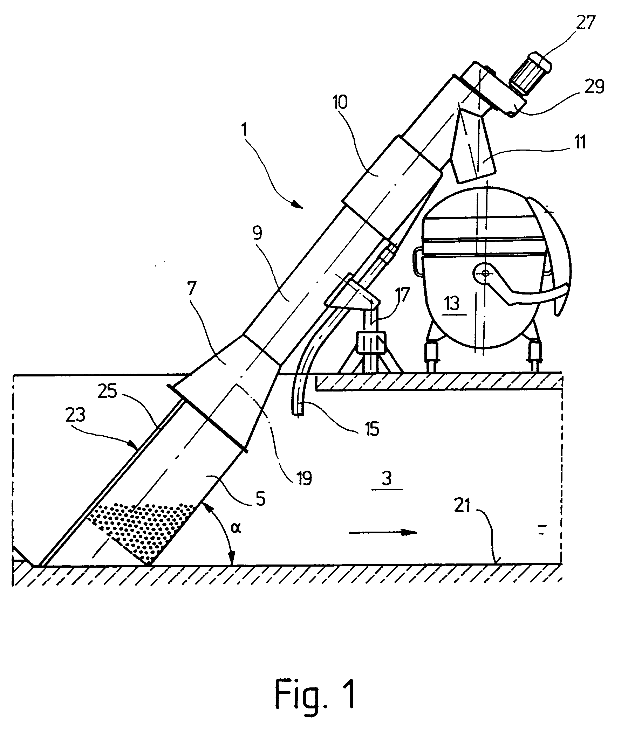

Der in Figur 1 dargestellte Spiralförderer 1 weist eine in ein Gerinne 3 eingebrachte Förderschnecke auf, die in dem Bereich, der in das Gerinne ragt, von einem Siebmantel 5 umgeben ist. Dieser ist im wesentlichen zylindrisch ausgebildet und, wie angedeutet, mit Öffnungen versehen. Eine Anzahl und ein Querschnitt der Öffnungen kann in Abhängigkeit von den Einsatz- und Betriebsvoraussetzungen des Spiralförderers 1 gewählt sein. Üblicherweise werden die Öffnungen von runden Löchern gebildet. Je nach Einsatz können jedoch auch Langlöcher oder sogenannte Spaltsiebböden gebildet sein. Für die Erläuterung der Erfindung ist die Wahl des Querschnitts der Öffnungen nicht relevant, so daß auf deren ausführliche Beschreibung verzichtet wird. Gemäß der in Figur 1 gezeigten Darstellung besitzt der Siebmantel 5 eine Vielzahl im wesentlichen symmetrisch angeordneter runder Löcher. Der Siebmantel 5 kann von einem im wesentlichen zylindrisch geformten Blechteil oder Spaltsieb gebildet werden, das nicht vollständig geschlossen ist, sondern entgegen der in dem Gerinne vorherrschenden, durch einen Pfeil angedeuteten Strömung geöffnet ist. Durch diese Öffnung kann also das in dem Gerinne strömende Feststoff-Flüssigkeitsgemisch in den Siebmantel eintreten, wobei die Flüssigkeit durch die Öffnungen im Siebmantel austreten kann, während sich die Feststoffe dort fangen. Diese werden durch eine in Figur 1 nicht sichtbare Förderschnecke aus dem Bereich des Siebmantels ausgetragen und über einen konischen Rohrabschnitt 7 in einen zylindrischen Rohrbereich 9 weiterbefördert und gelangen durch diesen über eine Preßzone 10 zu einem Auswurf 11, der sich in einen geeigneten Behälter 13 öffnet. Der Behälter 13 steht außerhalb des Gerinnes 3. Die aus dem Gerinne 3 ausgetragenen Feststoffe werden in der Preßzone 10 zunehmend komprimiert. Das dabei austretende Wasser wird über ein Entwässerungsrohr 15 in das Gerinne 3 zurückgeleitet. Der Spiralförderer 1 wird auf geeignete Weise von einer Halterung 17 unterstützt, die außerhalb des Gerinnes 3 verankert ist.

Die Dreh- beziehungsweise Mittelachse 19 des Spiralförderers 1 ist gegenüber der Sohle 21 des Gerinnes 3 geneigt. Hier ist beispielsweise ein Neigungswinkel α von 45° realisiert. Der Siebmantel 5 reicht bis zur Sohle 21. Im Bereich der entgegen der Strömungsrichtung vorgesehenen Öffnung 23 des Siebmantels 5 sind seitliche Leitbleche 25 vorgesehen, die sich bis zu den seitlichen Begrenzungswänden des Gerinnes 3 erstrecken und dafür sorgen, daß das gesamte Wasser durch den Siebmantel 5 geleitet wird.

An dem Spiralförderer 1 ist oben ein geeigneter Antrieb 27 vorgesehen, der über ein Getriebe 29 die im Inneren des Spiralförderers 1 verlaufende Förderschnecke antreibt.

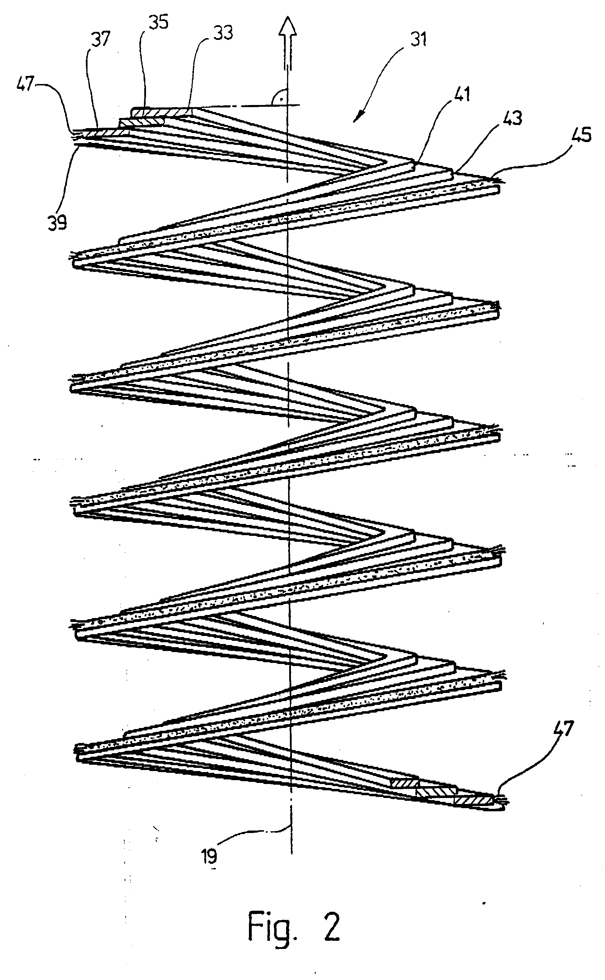

Figur 2 zeigt einen Abschnitt der im Inneren des Spiralförderers 1 verlaufenden Förderschnecke und zwar den Bereich, der sich im Inneren des Siebmantels 5 (siehe Figur 1) befindet und als Spirale 31 ausgebildet ist. Die Spirale 31 ist hier, also im Bereich des Siebmantels 5, als wellenlose Spirale 31 ausgebildet. Ihr Außendurchmesser ist so gewählt, daß sie den Siebmantel 5 an dessen Innenfläche berührt. Die Spirale 31 weist mindestens zwei, hier beispielsweise vier gegeneinander abgestufte Spiralgänge 33, 35, 37 und 39 auf, die im wesentlichen bandförmig ausgebildet sind. Da die Spirale 31, die in Figur 2 in einer Ansichtsdarstellung wiedergegeben ist, in ihren oberen und unteren Endbereichen geschnitten dargestellt ist, wobei die Schnittebene durch die mit der Mittelachse 19 des Spiralförderers 1 zusammenfallenden Drehachse verläuft, ist erkennbar, daß der Querschnitt der einzelnen Spiralgänge im wesentlichen rechteckförmig ist. Die Spiralgänge überlappen sich bereichsweise, so daß sich eine stufenförmige Oberfläche ergibt. Die Spiralgänge 33 bis 39 sind so angeordnet, daß jede ihrer in der Schnittdarstellung ersichtliche Breitseite mit der Mittelachse 19 etwa einen rechten Winkel einschließt.

Die einzelnen Spiralgänge 33 bis 39 sind entlang einer gedachten Schraubenlinie angeordnet, so daß sich die Spirale 31 der Förderschnecke ergibt. Der Außendurchmesser der einzelnen Spiralgänge ist nicht gleich. Der Spiralgang 33 mit dem kleinsten Außendurchmesser liegt auf dem Innenbereich des nächstliegenden Spiralgangs 35 auf, so daß sich diese Spiralgänge bereichsweise überdecken. Der Außendurchmesser des Spiralgangs 35 ist etwas größer als der Innendurchmesser des Spiralgangs 37, so daß auch diese beiden Spiralgänge sich bereichsweise überdecken. Der Außendurchmesser des Spiralgangs 37 ist entsprechend etwas größer als der Innendurchmesser des Spiralgangs 39, so daß auch hier eine Überdeckung der beiden Spiralgänge gegeben ist. Insgesamt wird damit also die angesprochene Stufenstruktur gebildet.

Der Außendurchmesser der einzelnen Spiralgänge 33 bis 39 ist über die gesamte, in Richtung der Mittelachse 19 gesehene Längserstreckung der Spirale 31 jeweils gleichbleibend, so daß sich bei einer Drehbewegung der Spirale 31 um die Mittelachse 19 für jeden einzelnen Spiralgang 33 bis 39 eine zylindrische Umhüllung ergibt, wobei der Außendurchmesser des äußersten Spiralgangs 39 etwas kleiner ist als der Innendurchmesser des Siebmantels 5.

Wird die Spirale 31 durch den Motor 27 in eine Drehbewegung versetzt, werden in den Siebmantel 5 eingetragene Feststoffe in Richtung des Doppelpfeils (siehe Figur 2) befördert. Der in Richtung der Förderrichtung gesehen vorderste Spiralgang 33 weist nach allem also einen geringeren Abstand zur Mittelachse 19 auf, als der zurückspringende nächste Spiralgang 35. Entsprechendes gilt für die Spiralgänge 35 und 37 sowie 37 und 39.

Durch den im wesentlichen rechteckförmigen Querschnitt der einzelnen Spiralgänge 33 bis 39 entstehen, durch die der Mittelachse 19 abgewandten Schmalseiten der Spiralgänge 33, 35 und 37, Stufen 41, 43 und 45 mit senkrecht auf der Oberfläche des angrenzenden Spiralgangs stehenden Flanken. Da der Außendurchmesser der Spiralgänge über die Längsausdehnung der Mittelachse 19 gesehen gleich ist, üben diese Stufen 41 bis 45 bei einer Rotation der Spirale 31 keine radial nach außen, in Richtung auf die Innenfläche des Siebmantels 5 wirkenden Kräfte auf die von der Spirale 31 ausgetragenen Feststoffe aus. Dennoch verhindern diese Stufen 41 bis 45, daß die Feststoffe in den freien Mittelraum der Spirale 31 fallen, der sich um die Mittelachse 19 erstreckt. Einmal von der Spirale 31 erfaßte Materialien werden durch die Stufen 41 bis 45 also sicher daran gehindert, in den inneren Freiraum der Spirale 31 auszuweichen. Es bilden sich also mit der Innenfläche des Siebmantels 5 quasi Fördertaschen aus, die eine verbesserte Austragung der Feststoffe aus dem Gerinne 3 sicherstellen, auch wenn der Spiralförderer 1 mit einem Installationswinkel von mehr als 35° in ein Gerinne 3 eingesetzt wird.

Die einzelnen Spiralgänge 33 bis 39 weisen eine einfache Struktur auf, so daß die Herstellung der Spirale 31 preiswert durchführbar ist.

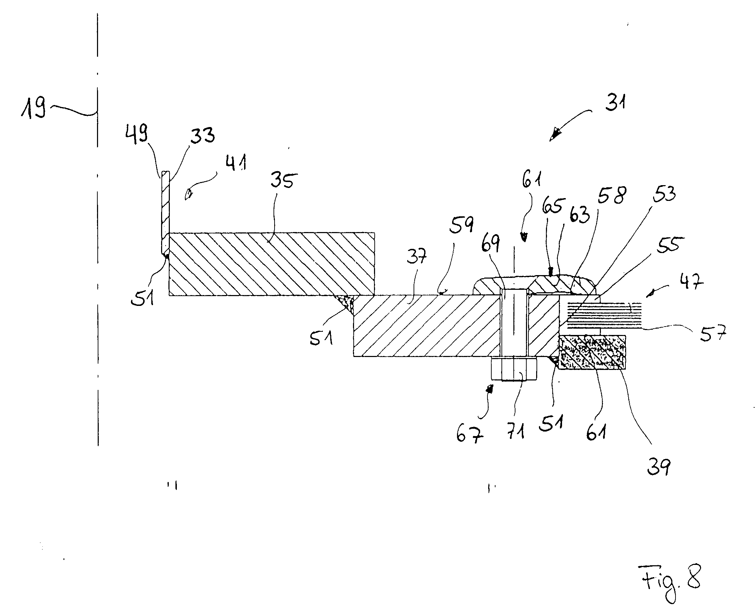

Über den äußeren Umfang des äußersten Spiralgangs 39 ragt eine mit der Innenfläche des Siebmantels 5 zusammenwirkende Bürste 47, die der Reinigung des Siebmantels 5 dient. Die Bürste 47 überragt die Spirale 31 nicht frei, sie wird vielmehr bereichsweise von dem äußersten Spiralgang 39 überdeckt. Die Bürste 47 ist damit in den Bereich der letzten Stufe 45 zwischen dem äußersten Spiralgang 39 und dem zweitäußersten Spiralgang 37 - wie anhand von Figur 8 näher erläutert wird - quasi zurückgesetzt angeordnet. Das von der Spirale 31 aus dem Gerinne 3 ausgetragene Material kann daher während des Umlaufs der Spirale 31 im Siebmantel 5 zum äußersten Spiralenumfang gelangen. Der auf die auch als Siebgut bezeichneten Feststoffe wirkende Reibungswiderstand der Spirale 31 beziehungsweise der Spiralbürste 47 wird dabei deutlich vermindert, so daß ein Gleiten des Fördermaterials an der Spiralenflanke erleichtert ist. Würde sich nämlich das ausgetragene Material auf der Oberseite der Spirale 31 festsetzen, käme es zu einer schlichten Rotationsbewegung dieses Materials, ohne eine in Richtung der Mittelachse 19 verlaufende Transportbewegung, die für die Austragung der Feststoffe aus dem Gerinne 3 zwingend erforderlich ist, auch dafür, daß die Feststoffe durch den konischen Rohrabschnitt 7 und den Rohrbereich 9 zum Auswurf 11 befördert werden.

Insgesamt wird erkennbar, daß die einzelnen Elemente, also die Spiralgänge 33 bis 39, aus der sich die Spirale 31 zusammensetzt, sehr einfach ausgebildet sind. Es werden hier vorzugsweise bandförmige Materialien verwendet, die entlang einer gedachten Schraubenlinie verlaufen. Die Verbindung der einzelnen Spiralgänge 33 bis 39 ist sehr einfach möglich, beispielsweise durch herkömmliche Schweißverfahren, bei denen die Spiralgänge 33 bis 39 entlang ihrer unten liegenden Kanten miteinander verschweißt werden oder aber in einem Punktschweißverfahren. Dabei ist durch die Spirale 31 gewährleistet, daß der Spiralförderer 1 in einem steileren Winkel in ein Gerinne 3 eingesetzt werden kann, ohne daß von der Spirale 31 im Bereich des Siebmantels 5 ausgetragene Materialien durch den freien Innenraum der wellenlosen Spirale 31 zurückfallen, wodurch der Wirkungsgrad des Spiralförderers 1 zumindest vermindert, gegebenenfalls sogar auf Null reduziert wird.

Durch die spezielle Ausgestaltung der Spiralgänge 33 bis 39, die von Stufe zu Stufe von innen nach außen größer werdende Durchmesser aufweisen, wobei der Spiralgang 33 mit dem kleinsten Durchmesser - in Förderrichtung gesehen - in vorderster Position angeordnet ist, werden Fördertaschen ausgebildet, die für die verbesserte Austragung der Feststoffe sorgen. Gleichzeitig gewährleisten die bei einer Drehung der Spirale 31 auf einer gedachten Zylinderfläche umlaufenden Außenkanten der einzelnen Spiralgänge 33 bis 39, daß ausgetragene Feststoffe nicht gegen den Siebmantel 5 gepreßt werden, wodurch sich einerseits die Reibungskräfte und damit die Antriebsenergie erhöhen, andererseits aber auch die Gefahr besteht, daß sich die Feststoffe zwischen den Stufen 41, 43 und 45 der Spirale 31 in dem Freiraum zur Innenfläche des Siebmantels 5 verklemmen und einen Stau verursachen.

Aus Figur 2 ist ersichtlich, daß die radial, das heißt, senkrecht zur Mittelachse 19 gemessene Breite der einzelnen Spiralgänge 33 bis 39 variiert werden kann, um die Anordnung der Stufen 41, 43 und 45 an die auszutragenden Feststoffe, aber auch beispielsweise an den Gesamt-Außendurchmesser der Spirale 31 anzupassen. Es wurde oben unterstellt, daß die Spiralgänge 33 bis 39 aus Metall gefertigt sind. Selbstverständlich ist es für die Beförderung entsprechender Materialien und bei einer Auswahl geeigneter Substanzen auch möglich, die einzelnen Spiralgänge 33 bis 39 aus Kunststoff zu fertigen.

Bei den Erläuterungen zu den Figuren 1 und 2 wurde davon ausgegangen, daß die einzelnen Spiralgänge sich zumindest bereichsweise überlappen. Diese Ausführungsform stellt eine sehr stabile Variante der Spirale der Förderschnecke dar.

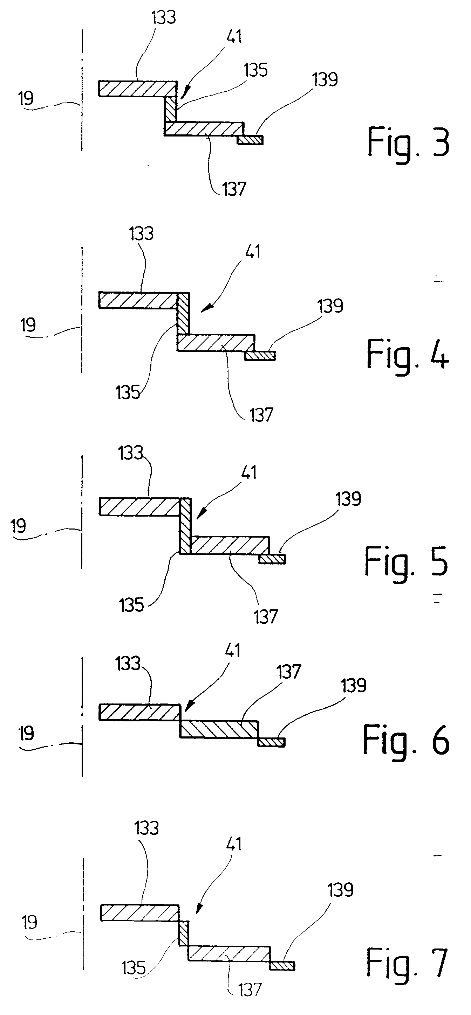

In den Figuren 3, 4 und 5 werden Ausführungsformen der Spirale anhand von Prinzipskizzen erläutert, bei denen eine andere Art der Überlappung gegeben ist, wie sie in Figur 1 dargestellt ist. Es werden nämlich im Übergangsbereich zwischen je zwei benachbarten Spiralgängen, die bandförmig ausgebildet sind, wobei die Mittelebene dieser Spiralgänge senkrecht auf der Mittelachse der Spirale steht, Spiralgänge eingesetzt, deren Mittelebene parallel zu der Mittelachse 19 verläuft. Aus Gründen der Übersichtlichkeit wurde hier auf die Darstellung der Bürste 47 verzichtet, wobei jedoch klar ist, daß diese in der jeweils von den zweitäußeren Spiralgängen ausgebildeten Stufe angeordnet ist.

In der skizzenhaften Schnittdarstellung gemäß Figur 3 wird davon ausgegangen, daß sich an dem innersten Spiralgang 133, der der Mittelachse 19 also am nächsten liegt, ein senkrecht zum innersten Spiralgang angeordneter mittlerer Spiralgang 135 anschließt, der mit seinen Schmalseiten einerseits an den innersten Spiralgang 133 und andererseits an einen weiteren Spiralgang 137 auf geeignete Weise angebracht ist. Denkbar ist es, daß die Spiralgänge in einem Schweißverfahren miteinander verbunden sind.

Der äußerste Spiralgang 139 ist wiederum in teilweiser Überlappung gegenüber dem mittleren Spiralgang 137 angeordnet, wie dies bereits anhand von Figur 2 erläutert wurde.

Durch den quasi senkrecht stehenden Spiralgang 135 kann die Höhe der Stufe 41 vergrößert werden. Je größer die - in Richtung der Mittelachse 19 gemessene - Breite des Spiralgangs 135 ist, um so größer ist die Höhe der Stufe 41.

Bei der Prinzipskizze gemäß Figur 4 finden sich ähnliche Gegebenheiten wie bei der Spirale in Figur 3. Es ist hier jedoch erkennbar, daß der innerste Spiralgang 133 mit seiner Schmalseite an die der Mittelachse 19 zugewandten Seitenfläche des nächsten Spiralgangs 135 angebracht ist, der - wie in Figur 3 - seinerseits mit einer Schmalseite an einer Seitenfläche des benachbarten Spiralgangs 137 anschließt.

Auch hier ist eine Überlappung zwischen dem Spiralgang 137 und dem sich nach außen anschließenden Spiralgang 139 gegeben.

Eine weitere Ausgestaltungsmöglichkeit der Spirale ergibt sich aus Figur 5, bei der zwischen den Spiralgängen 133 und 137 ein quasi senkrecht stehender Spiralgang 135 vorgesehen ist, an dessen in Richtung der Mittelachse 19 verlaufenden Seitenflächen die Schmalseiten der Spiralgänge 133 und 137 angebracht sind.

Radial nach außen schließt sich wiederum ein äußerer Spiralgang 139 an.

Auch bei den Ausführungsbeispielen gemäß den Figuren 4 und 5 wird durch den quasi senkrecht stehenden Spiralgang 135 die Stufe 41 ausgebildet, auf die bereits anhand von Figur 2 näher eingegangen wurde.

Aus den Figuren 2 bis 5 wird deutlich, daß durch die Wahl von verschiedenen Breiten und Dicken für die einzelnen Spiralgänge Stufen unterschiedlicher Höhe und Breite ausgebildet werden können. Durch die zumindest bereichsweise gegebene Überlappung zwischen den benachbarten Spiralgängen wird eine hohe Stabilität der gesamten Spirale sichergestellt.

Aus den Figuren 6 und 7 wird ohne weiteres deutlich, daß die Spirale auch aus einzelnen Spiralgängen herstellbar ist, die keinerlei Überlappung aufweisen. Die an ihren Kanten sich berührenden Spiralgänge können auf geeignete Weise miteinander verbunden, beispielsweise verschweißt sein. Denkbar ist auch, daß auf der den transportierten Feststoffen abgewandten Rückseite der Spirale in mehr oder weniger großen Abständen Stabilisierungselemente angebracht sind. Dies ist selbstverständlich auch bei den anhand der Figuren 2 bis 5 erläuterten Ausführungsbeispielen möglich.

Figur 6 zeigt drei nebeneinanderliegende Spiralgänge 133, 137 und 139, wobei die beiden inneren Spiralgänge 133 und 137 etwa die gleiche Breite und Dicke aufweisen, während der - von der Mittelachse 19 aus gesehene - Spiralgang 139 schmaler und dünner ausgebildet ist. Die Spiralgänge berühren sich jeweils in ihren Kantenbereichen, da der Außendurchmesser des Spiralgangs 133 so groß ist, wie der Innendurchmesser des Spiralgangs 137 und der Außendurchmesser des Spiralgangs 137 gleich groß, ist wie der Innendurchmesser des Spiralgangs 139.

Die Höhe der Stufe 41 wird von der Dicke des Spiralgangs 133 festgelegt.

Wenn eine größere Höhe für die Stufe 41 gewünscht wird, kann zwischen dem innersten Spiralgang 133 und dem weiteren Spiralgang 137 ein quasi senkrecht stehender Spiralgang 135 eingebracht werden, der die Spiralgänge 133 und 137 jeweils nur mit einer Kante berührt. In einem größeren Abstand zur Mittelachse 19 verläuft wiederum ein Spiralgang 139, der den sich nach innen anschließenden Spiralgang 137 mit seiner Kante berührt.

Die Figuren 3 bis 7 sollen deutlich machen, daß der Aufbau der Spirale in einem weiten Rahmen variiert werden kann, ohne daß deren Grundprinzip verlassen wird. Die Wahl der Breite und Dicke der einzelnen Spiralgänge wird an die gewünschten Gegebenheiten angepaßt. Wie aus den Figuren 3 bis 7 ersichtlich, kann auf die Bürste 47 verzichtet werden, die die gedachte äußerste Hüllfläche des äußersten Spiralgangs 139 etwas überragt, wenn auf eine Reinigung der Mantelfläche des Spiralförderers kein besonderer Wert gelegt wird. Dies ist beispielsweise dann der Fall, wenn der Mantel durchgehend und nicht als Siebmantel ausgebildet ist.

In der Figur 8 ist eine Schnittdarstellung der Spirale 31 nach einem besonders bevorzugten Ausführungsbeispiel gezeigt. Gleiche Teile wie in Figur 2 sind trotz eines teilweise unterschiedlichen Aufbaus mit gleichen Bezugszeichen versehen, um den Gedanken der Erfindung zu verdeutlichen. Die Spirale 31 weist insgesamt die vier Spiralgänge 33 bis 39 auf. Der innerste Spiralgang 33, das heißt, der der angedeuteten Mittelachse 19 zugewandte Spiralgang 33, ist als in axialer Richtung der Spirale 31 Verlaufender Steg 49 ausgebildet. Der Steg 49 besitzt eine im Verhältnis zu seiner axialen Länge beziehungsweise Höhe gesehene geringe Breite. Hierdurch wird erreicht, daß mit einem relativ geringen Materialeinsatz eine im Verhältnis hohe Stufe 41 erzielt wird. Der Spiralgang 35 liegt bereichsweise mit seiner der Mittelachse 19 zugewandten Fläche auf der dem Siebmantel zugewandten Fläche des Spiralgangs 33 auf. Zwischen den Spiralgängen 33 und 35 kann eine hier angedeutete Schweißnaht 51 den notwendigen mechanischen Halt geben. Die Spiralgänge 35 und 37 berühren sich - wie in Figur 2 - an radial zur Mittelachse 19 verlaufenden Flächen, wobei die in Transportrichtung vordere Fläche des Spiralganges 37 bereichsweise die entgegen der Transportrichtung gerichtete Fläche des Spiralganges 35 überdeckt. Zur Verbindung und Stabilisierung ist wiederum eine Schweißnaht 51 vorgesehen.

Der Spiralgang 39 liegt mit seiner der Mittelachse 19 zugewandten Fläche bereichsweise auf der dem Siebmantel zugewandten Fläche des Spiralganges 37 auf. Eine Verbindung kann wiederum durch eine Schweißnaht 51 stabilisiert werden. Durch das bereichsweise Überdecken der Spiralgänge 39 und 37 wird eine Stufe 53 ausgebildet, innerhalb der die Bürste 47 angeordnet ist. Die Bürste 47 besitzt einen Bürstengrundkörper 55, in dem die hier lediglich schematisch angedeuteten Borsten 57 arretiert sind. Die Borsten 57 verlaufen hierbei im wesentlichen parallel zur Oberfläche des äußersten Spiralgangs 39. Der Grundkörper 55 ist ebenfalls bandförmig ausgebildet und folgt der durch die Spiralgänge 37 beziehungsweise 39 vorgegebenen Spirallinie. Der im wesentlichen U-förmig ausgebildete Grundkörper 55 besitzt einen in etwa quadratischen Querschnitt, wobei die in Förderrichtung vorne liegende Fläche 58 mit der in Förderrichtung vorne liegenden Fläche 59 des Spiralganges 37 fluchtet. Das heißt, die Flächen 58 und 59 bilden eine praktisch durchgehende, glatte ebene Fläche aus. Der im wesentlichen quadratische Querschnitt des Grundkörpers 55 ist hierbei lediglich idealerweise angenommen. Aus fertigungstechnischen Gründen kann es möglich sein, daß die die Borsten 57 einspannenden Schenkel des U-förmigen Grundkörpers 55 überkantet sind, das heißt, geringfügig nach innen in Richtung der Borsten 57 weisen. Hierdurch ergibt sich, daß die in Förderrichtung vorne liegende Fläche 58 des Grundkörpers 55 in Richtung des Siebmantels gegenüber der Fläche 59 leicht abfällt.

Mit der in Förderrichtung gesehen entgegengesetzt angeordneten Fläche 61 liegt der Grundkörper 55 an dem Spiralgang 39 an. Zur Arretierung der Bürste 47 ist eine Klemmeinrichtung 61 vorgesehen, die wenigstens ein als Halteklammer 63 ausgebildetes Klemmelement 65 aufweist. Über die Spirallinie der Spirale 31 betrachtet, sind im Abstand zueinander eine ausreichend große Anzahl von Klemmeinrichtungen 61 vorgesehen, die ein sicheres Arretieren der Bürste 47 gewährleisten. Mittels der Halteklammer 63, die die Fläche 58 des Grundkörpers 55 übergreift, wird der Grundkörper 55 gegen den Spiralgang 39 gedrückt, so daß dieser zwischen dem Spiralgang 39 und der Halteklammer 63 unverrückbar festgeklemmt ist. Zum Spannen der Halteklammer 63 ist ein die Klemmkraft aufbringendes Spannelement 67 vorgesehen. Dieses ist beispielsweise als Spannschraube 69 ausgebildet, die eine entsprechende Durchgangsöffnung der Halteklammer 63 und des Spiralganges 37 durchgreift. An der der Förderrichtung der Spirale 31 abgewandten Seite ist hier die Spannschraube 69 mittels einer Mutter 71 festgelegt.

Im gezeigten Beispiel besitzt die Spannschraube 69 einen Senkkopf, der in einer entsprechenden Ausnehmung der Halteklammer 63 versenkt angeordnet ist. Die Halteklammer 63 besitzt weiterhin abgerundete Kanten, die ein Verfangen von mit der Spirale 31 transportiertem Transportgut verhindern.

Nach weiteren, nicht dargestellten Ausführungsbeispielen, kann die gesamte Klemmeinrichtung 61 in einer entsprechenden Ausnehmung des Spiralganges 37 und des Grundkörpers 55 versenkt angeordnet sein, so daß sich eine glatte Ebene von den Flächen 58 beziehungsweise 59 gebildete Transportfläche ergibt. Schließlich ist es möglich, die Bürste 47 mittels einer den Grundkörper 55 durchdringenden Schraube unmittelbar an der Spirale 39 zu befestigen.

Bei dem in Figur 8 gezeigten fluchtenden Verlauf der Fläche 59 des Spiralganges 37 und der Fläche 58 des Grundkörpers 55 - die wie erwähnt auch geneigt verlaufen kann -, handelt es sich lediglich um eine mögliche, besonders bevorzugte Ausführungsvariante.

So ist es auch im Sinne der Erfindung, wenn die Fläche 58 gegenüber der Fläche 59 leicht zurückgesetzt oder leicht überstehend angeordnet ist. Hierdurch kommt es zu einer zusätzlichen abfallenden oder geringfügig nach außen ansteigenden Stufe. Diese zusätzliche Stufe ergibt sich, indem die axiale Erstreckung des Grundkörpers 55 kleiner oder größer als die axiale Erstreckung der Stufe 53 ist.

Insgesamt wird mit der in Figur 8 gezeigten Spirale 31 ein besonders gutes Transportergebnis erreicht. Durch die glatte ebene Transportfläche, die von den Teilflächen 58 und 59 gebildet wird, wird während der Rotation der Spirale 31 dem Transportgut der geringstmögliche Widerstand entgegengesetzt. Mittels der die relativ große Stufe 41 ausbildenden Anordnung der Spiralgänge 35 und 33 wird ein Zurückfallen des Transportgutes in den Innenraum der Spirale 31, selbst bei einem relativ großen Winkel α (Figur 1), verhindert.

Durch die Wahl der verschiedenen Stufen - wobei die Figuren 3 bis 8 nur eine Auswahl der bestehenden Möglichkeiten zeigen - kann die Förderleistung des Spiralförderers in allen Fällen beeinflußt werden, auch wenn dieser horizontal angeordnet ist, so daß die in den Figuren 2 bis 7 dargestellte Mittelachse 19 ebenfalls horizontal verläuft. Durch die abgestuften Spiralgänge werden also quasi Fördertaschen gebildet, die die Menge der von der Förderschnecke geförderten Feststoffe erhöhen.

Allen Ausführungsbeispielen ist gemeinsam, daß die der Förderung der Feststoffe dienende Oberfläche der Spiralgänge senkrecht zur Mittelachse 19 angeordnet ist, während die von zwei benachbarten Spiralgängen gebildeten Stufen ihrerseits senkrecht auf den Seitenflächen der Spiralgänge stehen und damit parallel zur Mittelachse 19 verlaufen. Es ist also ausgeschlossen, daß die Stufen zwischen den einzelnen Spiralgängen radial nach außen wirkende Druckkräfte auf die zu transportierenden Feststoffe ausüben, so daß die Reibungsverluste minimal sind und ein Festfressen der Spirale mit hoher Sicherheit auszuschließen ist.

Aus dem oben Gesagten wird ohne weiteres ersichtlich, daß die Anzahl, Breite und Höhe der einzelnen Spiralgänge an die jeweilige Ausgestaltung der Förderschnecke angepaßt werden können, wobei der Innendurchmesser des Freiraums der wellenlosen Spirale und der Außendurchmesser der Förderschnecke eine Rolle spielen.

## Patentansprüche

1. Spiralförderer zum Transportieren von Feststoffen, mit einer in einem Mantel umlaufenden Förderschnecke, die zumindest abschnittsweise als wellenlose Spirale (31) ausgebildet ist und die wenigstens zwei im wesentlichen bandförmige, entlang einer gedachten Schraubenlinie verlaufende, stufenförmig zueinander angeordnete Spiralgänge (33,35,37) aufweist, **dadurch gekennzeichnet**, daß im wellenlosen Bereich der Spirale (31) in einer von zwei äußeren Spiralgängen (37,39) auf der Transportseite der Spirale (31) gebildeten Stufe (53) eine Bürste (47) anbringbar ist und daß in Richtung auf die Mittelachse (19) der Spirale (31) wenigstens eine weitere Stufe durch Spiralgänge (33,35,37) gebildet wird, deren in Transportrichtung vorderer Spiralgang (33,35,37) einen geringeren Abstand zur Mittelachse (19) der Spirale (31) aufweist, als der in Transportrichtung nachfolgende Spiralgang (35,37,39).

2. Spiralförderer nach Anspruch 1, **dadurch gekennzeichnet**, daß der Mantel im wellenlosen Bereich als Siebmantel (5) ausgebildet ist und die Bürste (47) in diesem Bereich angeordnet ist.

3. Spiralförderer nach Anspruch 2, **dadurch gekennzeichnet**, daß die Bürste (47) mit ihrer in Transportrichtung verlaufenden Seitenfläche (58) mit einer im wesentlichen radialen, zur Mittelachse (19) der Spirale (31) verlaufenden Transportfläche (59) des zweitäußersten Spiralgangs (37) fluchtet.

4. Spiralförderer nach einem der vorher genannten Ansprüche, **dadurch gekennzeichnet**, daß die Seitenfläche (58) der Bürste gegenüber der Transportfläche (59) des zweitäußersten Spiralgangs - in Richtung des Mantels (5) gesehen - leicht abfällt.

5. Spiralförderer nach einem der vorher genannten Ansprüche, **dadurch gekennzeichnet**, daß die Bürste (47) parallel zu dem äußersten Spiralgang (39) der Spirale (31) angeordnet ist.

6. Spiralförderer nach einem der vorher genannten Ansprüche, **dadurch gekennzeichnet**, daß die Bürste (47) mittels einer wenigstens ein Klemmelement (65) aufweisenden Klemmeinrichtung (61) gegen den als Gegenlager wirkenden äußersten Spiralgang (39) festspannbar ist.

7. Spiralförderer nach einem der vorher genannten Ansprüche, **dadurch gekennzeichnet**, daß die Bürste (47) einen Bürstengrundkörper (55) aufweist, von dem sich die Borsten (57) der Bürste (47) im wesentlichen parallel zu dem äußersten Spiralgang (39) erstrecken.

8. Spiralförderer nach einem der vorher genannten Ansprüche, **dadurch gekennzeichnet**, daß die Klemmeinrichtung (61) den Bürstengrundkörper (55) gegen den äußersten Spiralgang (39) spannt.

9. Spiralförderer nach einem der vorher genannten Ansprüche, **dadurch gekennzeichnet**, daß das Klemmelement (65) eine Halteklammer (63) ist, die mittels wenigstens eines Spannelementes (67) mit einer Klemmkraft beaufschlagbar ist.

10. Spiralförderer nach einem der vorher genannten Ansprüche, **dadurch gekennzeichnet**, daß das Spannelement (69) in der Halteklammer (63) versenkt angeordnet ist.

11. Spiralförderer nach einem der vorher genannten Ansprüche, **dadurch gekennzeichnet**, daß die Klemmeinrichtung (61) einschließlich des Spannelementes (67) auf der in Transportrichtung vorderen Seite des zweitäußersten Spiralgangs (37) und des Bürstengrundkörpers (55) versenkt angeordnet ist.

12. Spiralförderer nach einem der vorher genannten Ansprüche, **dadurch gekennzeichnet**, daß der Bürstengrundkörper (55) zu dem zweitäußersten Spiralgang (37) eine in Richtung des Mantels (5) abfallende oder leicht ansteigende Stufe bildet.

13. Spiralförderer nach einem der vorher genannten Ansprüche, **dadurch gekennzeichnet**, daß die Spiralgänge (33, 35, 37, 39) sich bereichsweise überdekken.

14. Spiralförderer nach einem der vorher genannten Ansprüche, **dadurch gekennzeichnet**, daß die Spirale (31) vier Spiralgänge (33, 35, 37, 39) aufweist.

15. Spiralförderer nach einem der vorher genannten Ansprüche, **dadurch gekennzeichnet**, daß die Spiralgänge (33, 35, 37, 39) verschiedene - in senkrechter Richtung zur Mittelachse (19) gemessene - Breiten aufweisen.

16. Spiralförderer nach einem der vorher genannten Ansprüche, **dadurch gekennzeichnet**, daß die Spiralgänge (33, 35, 37, 39) verschiedene - in Richtung der Mittelachse (19) gemessene - Höhen aufweisen.

17. Spiralförderer nach einem der vorher genannten Ansprüche, **dadurch gekennzeichnet**, daß die Breite des innersten Spiralgangs (33) im Verhältnis zu dessen in axialer Richtung der Spirale (31) verlaufenden Höhe sehr klein ist.

18. Spiralförderer nach Anspruch 17, **dadurch gekennzeichnet**, daß der innerste Spiralgang (33) der Spirale (31) als koaxial zur Mittelachse (19) der Spirale (31) verlaufender Steg (49) ausgebildet ist.

## Claims

1. A helical conveyor for conveying solids, with, a conveying screw which rotates in a jacket and which is formed at least in part as a helix (31) without undulations and has at least two substantially strip-shaped helical threads (33, 35, 37) extending along an imaginary helical line and arranged stepwise with respect to one another, **characterized in that** in the region of the helix (31) without undulations a brush (47) can be attached in a step (53) formed by two outer helical threads (37, 39) on the conveying side of the helix (31), and in the direction towards the median axis (19) of the helix (31) at least one further step is formed by helical threads (33, 35, 37), of which the front helical thread (33, 35, 37) in the conveying direction is at a shorter distance from the median axis (19) of the helix (31) than the helical thread (35, 37, 39) following in the conveying direction.

2. A helical conveyor according to Claim 1, **characterized in that** the jacket in the region without undulations is constructed in the form of a mesh jacket (5), and the brush (47) is arranged in this region.

3. A helical conveyor according to Claim 2, **characterized in that** the lateral face (58) of the brush (47) extending in the conveying direction is in alignment with a substantially radial conveying face (59) - extending towards the median axis (19) of the helix (31) - of the second-outermost helical thread (37).

4. A helical conveyor according to one of the aforesaid Claims, **characterized in that** the lateral face (58) of the brush descends slightly with respect to the conveying face (59) of the second-outermost helical thread as viewed in the direction of the jacket (5).

5. A helical conveyor according to one of the aforesaid Claims, **characterized in that** the brush (47) is arranged parallel to the outermost helical thread (39) of the helix (31).

6. A helical conveyor according to one of the aforesaid Claims, **characterized in that** the brush (47) can be locked - by means of a clamping device (61) comprising at least one clamping member (65) - against the outermost helical thread (39) acting as an abutment.

7. A helical conveyor according to one of the aforesaid Claims, **characterized in that** the brush (47) has a base member (55) from which the bristles (57) of the brush (47) extend substantially parallel to the outermost helical thread (39).

8. A helical conveyor according to one of the aforesaid Claims, **characterized in that** the clamping device (61) clamps the base member (55) of the brush against the outermost helical thread (39).

9. A helical conveyor according to one of the aforesaid Claims, **characterized in that** the clamping member (65) is a retaining clamp (63) which can be acted upon with a clamping force by means of at least one clamping member (67).

10. A helical conveyor according to one of the aforesaid Claims, **characterized in that** the clamping member (69) is arranged sunk in the retaining clamp (63).

11. A helical conveyor according to one of the aforesaid Claims, **characterized in that** the clamping device (61) including the clamping member (67) is arranged sunk on the front side - in the conveying direction - of the second-outermost helical thread (37) and of the base member (55) of the brush.

12. A helical conveyor according to one of the aforesaid Claims, **characterized in that** the base member (55) of the brush forms a step descending or slightly rising in the direction of the jacket (5) with respect to the second-outermost helical thread (37).

13. A helical conveyor according to one of the aforesaid Claims, **characterized in that** the helical threads (33, 35, 37, 39) overlap in part.

14. A helical conveyor according to one of the aforesaid Claims, **characterized in that** the helix (31) comprises four helical threads (33, 35, 37, 39).

15. A helical conveyor according to one of the aforesaid Claims, **characterized in that** the helical threads (33, 35, 37, 39) have different widths as measured in a perpendicular direction with respect to the median axis (19).

16. A helical conveyor according to one of the aforesaid Claims, **characterized in that** the helical threads (33, 35, 37, 39) have different heights as measured in the direction of the median axis (19).

17. A helical conveyor according to one of the aforesaid Claims, **characterized in that** the width of the innermost helical thread (33) is very small in relation to the height thereof extending in the axial direction of the helix (31).

18. A helical conveyor according to Claim 17, **characterized in that** the innermost helical thread (33) of the helix (31) is formed as a web (49) extending coaxially to the median axis (19) of the helix (31).

## Revendications

1. Transporteur hélicoïdal pour transporter des matière solides, comprenant une vis transporteuse tournant dans une enveloppe, cette vis ayant au moins par segment une spirale (31) sans onde et au moins deux filets en spirale (33, 35, 37) essentiellement en forme de ruban, le long d'une ligne hélicoïdale fictive,
caractérisé en ce que
- au moins dans la zone de la spirale (31) sans ondulations, dans un des deux filets en spirale extérieurs (37, 39), une brosse (47) est fixée sur un gradin (53) formé sur le côté de transport de la spirale et
- en direction de l'axe central (19) de la spirale (31) il est formé au moins un autre gradin par les filets de spirale (33, 35, 37) dont le filet (33, 35, 37) amont dans la direction de transport est à une distance plus faible de l'axe (19) de la spirale (31) que le filet suivant (35, 37, 39) dans la direction de transport.

2. Transporteur hélicoïdal selon la revendication 1,
caractérisé en ce que
l'enveloppe dans la zone sans ondulations est une enveloppe en forme de tamis (5) et la brosse (47) est prévue dans cette zone.

3. Transporteur hélicoïdal selon la revendication 2,
caractérisé en ce que
la brosse (47) est alignée par sa surface latérale (58) par le second filet extérieur en spirale (37) sur une surface de transport (59) essentiellement radiale par rapport à l'axe (19) du second filet le plus extérieur (37).

4. Transporteur hélicoïdal selon l'une quelconque des revendications précédentes,
caractérisé en ce que
la surface latérale (58) de la brosse descend légèrement par rapport à la surface de transport (59) du second filet en spirale extérieur (en regardant dans la direction de l'enveloppe 5).

5. Transporteur hélicoïdal selon l'une quelconque des revendications précédentes,
caractérisé en ce que
la brosse (47) est parallèle au filet de spirale extérieur (39) de la spirale (31).

6. Transporteur hélicoïdal selon l'une des revendications précédentes,
caractérisé en ce que
la brosse (47) est serrée par une installation de serrage (61) ayant au moins un élément de serrage (65) contre le filet en spirale (39) le plus à l'extérieur, fonctionnant comme contre-appui.

7. Transporteur hélicoïdal selon l'une quelconque des revendications précédentes,
caractérisé en ce que
la brosse (47) comporte un corps de base (55) et les poils (57) de la brosse (47) sont dirigés de manière essentiellement parallèle vers le filet de spirale extérieure (39) à partir de ce corps de base.

8. Transporteur hélicoïdal selon l'une quelconque des revendications précédentes,
caractérisé en ce que
l'installation de serrage (61) presse le corps de base (55) de la brosse contre le filet de spirale extérieure (39).

9. Transporteur hélicoïdal selon l'une quelconque des revendications précédentes,
caractérisé en ce que
l'élément de serrage (65) est une pince de fixation (63) soumise à la force de serrage par au moins un élément de serrage (67).

10. Transporteur hélicoïdal selon l'une quelconque des revendications précédentes,
caractérisé en ce que
l'élément de serrage (69) est noyé dans la pince de fixation (63).

11. Transporteur hélicoïdal selon l'une quelconque des revendications précédentes,
caractérisé en ce que
l'installation de serrage (61) y compris l'élément de serrage (67) est prévue en retrait sur la face avant dans la direction de transport du second filet en spirale (37) le plus à l'extérieur et du corps de base (55).

12. Transporteur hélicoïdal selon l'une quelconque des revendications précédentes,
caractérisé en ce que
le corps de base (55) de la brosse forme par rapport au second filet en spirale (37) le plus à l'extérieur, un gradin descendant ou légèrement montant en direction de l'enveloppe (5).

13. Transporteur hélicoïdal selon l'une quelconque des revendications précédentes,
caractérisé en ce que
les filets en spirale (33, 35, 37, 39) se chevauchent par zone.

14. Transporteur hélicoïdal selon l'une quelconque des revendications précédentes,
caractérisé en ce que
la spirale (31) comporte quatre filets en spirale (33, 35, 37, 37).

15. Transporteur hélicoïdal selon l'une quelconque des revendications précédentes,
caractérisé en ce que
les filets en spirale (33, 35, 37, 39) ont des largeurs différentes mesurées dans la direction perpendiculaire à l'axe médian (19).

16. Transporteur hélicoïdal selon l'une quelconque des revendications précédentes,
caractérisé en ce que
les filets en spirale (33, 35, 37, 39) ont des hauteurs différentes mesurées dans la direction de l'axe médian (19).

17. Transporteur hélicoïdal selon l'une quelconque des revendications précédentes,
caractérisé en ce que
la largeur du filet en spirale (33) le plus à l'intérieur est très faible par rapport à la hauteur de la spirale (31) prise dans la direction axiale.

18. Transporteur hélicoïdal selon la revendication 17,
caractérisé en ce que
le filet de spirale (33) le plus à l'intérieur de la spirale (31) est formé par une bande (49) coaxiale à l'axe (19) de la spirale (31).
